# EUROPEAN PATENT SPECIFICATION

(11) **EP 0 877 313 B1**
(45) Date of publication and mention of the grant of the patent: **14.12.2005**
(21) Application number: 98303559.3
(22) Date of filing: 06.05.1998
(51) Int. Cl.: G06F 1/16

(54) **Pivot device and portable computer with pivot device**
Schwenkbare Vorrichtung und tragbarer Rechner mit schwenkbarer Vorrichtung
Dispositif à pivot et ordinateur portable avec dispositif à pivot

(30) Priority: 06.05.1997 KR 9717227
(43) Date of publication of application: 11.11.1998
(73) Proprietor: SAMSUNG ELECTRONICS CO., LTD., Suwon, Kyunggi-do (KR)
(72) Inventor: Lee, Jin-Hyup, Kwacheon-shi, Kyunggi-do (KR)
(74) Representative: Sanderson, Nigel Paul

(56) References cited:
- US-A- 5 168 426
- US-A- 5 566 048
- US-A- 5 636 102
- US-B1- 6 212 067
- PATENT ABSTRACTS OF JAPAN vol. 018, no. 224 (M-1596), 22 April 1994 (1994-04-22) -& JP 06 017570 A (KATO ELECTRICAL MACH. CO. LTD.), 25 January 1994 (1994-01-25)

## Description

### Background

The present invention relates, in general, to pivot devices. In particular, the present invention relates to a pivot device or hinge for use at a junction between a display body and a main body of a portable computer, for allowing the display body to pivot open relative to the main body. The present invention also relates to a portable computer provided with such a pivot device.

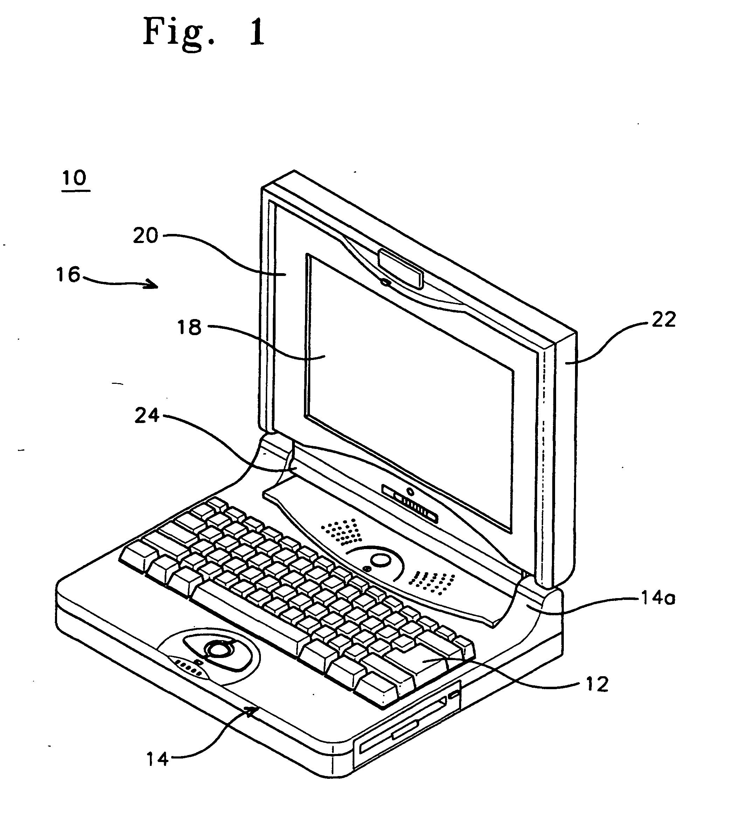

Fig. 1 is a perspective view of a conventional portable computer with an openable display body.

As shown in the drawing, the conventional portable computer 10 comprises a main body 14 and an openable display body 16 coupled to each other. The main body 14 typically includes an area for a CPU (not shown) and carries a keyboard 12 on its top surface. Meanwhile, the openable display body 16 is hinged to the rear edge of the main body 14 and carries display panel 18, such as an LCD (liquid crystal display) panel. The display panel 18 is electrically connected to the main body 14 and is designed to display data provided by the main body, such as from an enclosed CPU, according to operation of the keyboard 12 or other input devices.

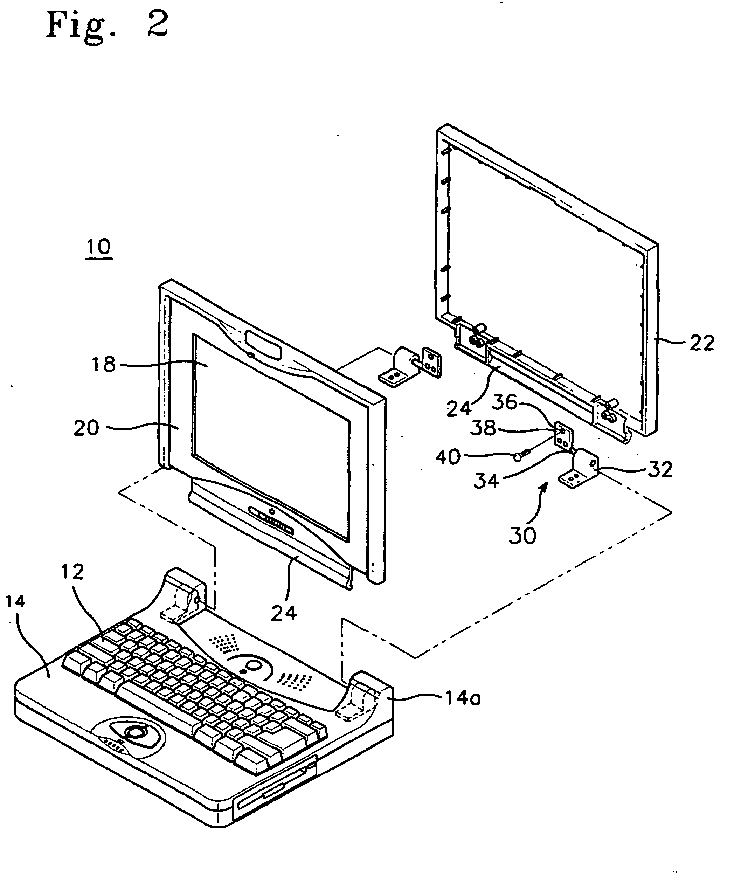

Fig. 2 is an exploded perspective view of a portable computer 10, showing the construction of a typical pivot device 30 provided at the junction between the two parts 14 and 16 of the computer 10.

As shown in the drawing, the display body 16 comprises a front panel 20 and a display housing 22. In the display body 16, the front panel 20 supports a front portion of the weighty display panel 18, while the display housing 22 supports the rear portion of the display panel 18.

The main body 14 is provided with a raised or upstanding housing portion 14a at each of the two rear corners, used for accommodating pivot bearings.

The front panel 20 and the display housing 22 of the display body 16 each have a protrusion 24 at the centre of the respective lower edge. When the front panel 20 and the display housing 22 are assembled into a single structure, the two protrusions, having co-operating configurations, are integrated into a single protrusion 24. When the computer 10 is assembled, the single protrusion 24 is positioned between the two raised or upstanding housing portions 14a of the main body 14.

The single protrusion 24 is hinged to the two raised or upstanding housing portions 14a using a pivot device 30 at each end, allowing the display body 16 to pivot open relative to the main body 14.

In the prior art, each of the pivot devices 30 comprises first and second co-operating pivot means: a pivot bearing 32 and a pivot member 38, which are coupled together. The pivot bearings 32 are each firmly retained within each of the raised or upstanding housing portions 14a of the main body 14. The pivot members 38 each consist of a flat mounting part with a pivot shaft 34. The flat mounting part is provided with a plurality of screw holes 36, through which the corresponding pivot member 38 is attached inside each end of the protrusion 24 of the display housing 22, using screws 40 or other suitable fixing means. Each pivot shaft 34 is pivotally inserted into a bore of a corresponding pivot bearing 32, so that the pivot member 38 may rotate relative to the pivot bearing 32.

In summary, a portable computer 10 with the above-described pivot device 30 has a display body 16 hinged to the rear edge of the main body 14 by pivot members 38, which are mounted inside the protrusion 24 of the display housing 22 using a plurality of screws 40, and of which the pivot shafts 34 are pivotally inserted into bores of the pivot bearings 32.

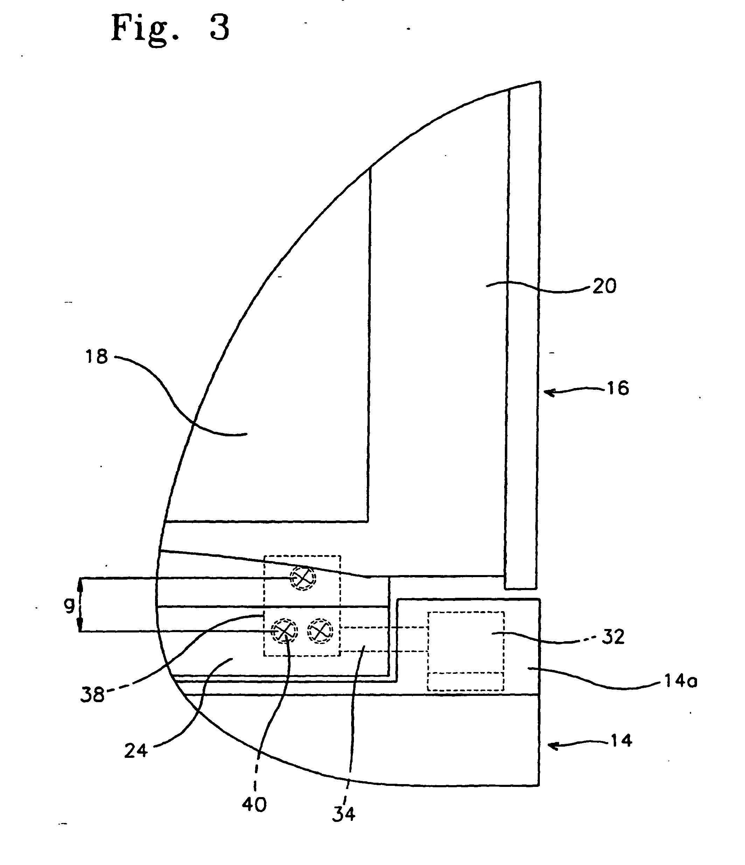

Figure 3 is a front elevation view showing a portable computer including the pivot device of Figure 2. The two elements 32 and 38 of the pivot device 30 with fixings 40 are shown in phantom, as placed within the computer. The display body 16 is thereby pivotally mounted to the main body 14.

As shown in the drawing, the distance "g" between supporting points of the pivot member 38 nearest to, and remotest from, the axis of rotation of the pivot shaft 34 is very short. The weight of the display body 16, and any torque required to open or close the display body is therefore concentrated onto a small region of the display housing 22 at a position near the axis of rotation of the pivot shaft 34. Every opening or closing action of the display body 16 therefore causes the display housing 22 to be distorted or deformed around this small region. This disadvantageously forms a gap between the display panel 18 and the front panel 20. This gap may lead to reduced support for the display panel 18, and in extreme cases could cause the display panel to fall out, or the display housing 22 to break.

Such a problem is becoming worse due to the recent trend towards large sized displays such as LCD panels. Use of a large sized LCD panel increases the total weight of the display body 16, acting on the rotating axis of the pivot shaft 34, so the distortion or deformation of the display housing 22 during an opening or closing action of the display body 16 becomes worse, thereby causing vibrations and fatigue fracture of the pivot member 38.

### Summary of the Invention

The present invention provides a pivot device for the junction between the openable display body and the main body of a portable computer which more effectively distributes the weight of a display panel. Distortion or deformation of the display housing during opening or closing of the display body is reduced.

Accordingly, the invention provides a pivot device for portable computers, comprising a pivot bearing and a corresponding pivot member, coupled together by a pivot shaft, for pivotally connecting a display body and a main body of a computer at a rear edge of the main body. The pivot member comprises a lower support part with at least one portion extending axially with respect to the pivot shaft and away from the pivot bearing for supporting a lower portion of the display body and a side support part extending radially away with respect to the pivot shaft, for supporting a side portion of the display body.

A further portion of the lower support part preferably extends radially away with respect to the pivot shaft.

The lower support part may be a rectangular "C" shape.

The lower support part is preferably wider than the side support part.

The lower support part and side support part may be integrally formed and the side support part extends from an end of the lower support part remote from the pivot shaft.

The pivot bearing is preferably retained within the main body of the computer. The pivot bearing is even more preferably retained within an upstanding housing portion of the main body of the computer.

The lower and/or side support parts of the pivot member may be respectively attachable mountable to lower and/or side portions of the display body, using at least one screw

The side support may be provided with at least one latching protrusion which engages and is retained by a retaining part of the side portion of the display body.

The side support part is optionally provided with at least one guide pin. The at least one guide pin may be adapted for engaging a shield plate.

The present invention also provides a portable computer comprising a main body, a display body and at least one pivot device, as claimed in claims 1 to 12, for use at a junction between the main body and display body.

The display body preferably comprises a display housing in which the pivot member is mounted and a front panel incorporating a recess on an interior surface to accommodate the pivot member.

A pivot bearing is preferably arranged at each rear corner of the main body of the computer and a corresponding pivot member is preferably arranged at each lower corner of the display body.

### Brief Description of the Drawings

The present invention will be described below with reference to certain particular embodiments, given by way of examples only, in conjunction with the accompanying drawings, in which:
Figure 1 is a perspective view of a conventional portable computer with an openable display body;
Figure 2 is an exploded perspective view of a portable computer, showing the construction of a typical pivot device provided in the computer of figure 1;
Figure 3 is a partial front elevation view of a computer showing the pivot device of figure 2, with the pivot member and the pivot bearing of the pivot device in place;
Figure 4 is an exploded perspective view of a pivot device; for portable computers in accordance with a first embodiment of the present invention;
Fig. 5 is a front elevation view of the pivot device of Fig. 4;
Fig. 6 is an exploded perspective view of a portable computer according to an aspect of the present invention;
Fig. 7 is a front elevation view of the computer of Fig. 6, with the pivot device of Fig. 5 in place;
Fig. 8 is a perspective view of a pivot device for portable computers in accordance with a second embodiment of the present invention;
Fig. 9 is an exploded perspective view showing the pivot device of Fig. 8 in a display body of a portable computer;
Fig. 10 is a partial front elevation view of a computer, showing the pivot device of Fig. 8, in place within a portable computer; and
Fig. 11 is a sectional view of a pivot device of the second embodiment taken along the line A-A of Fig. 10.

### Detailed Description of the Drawings

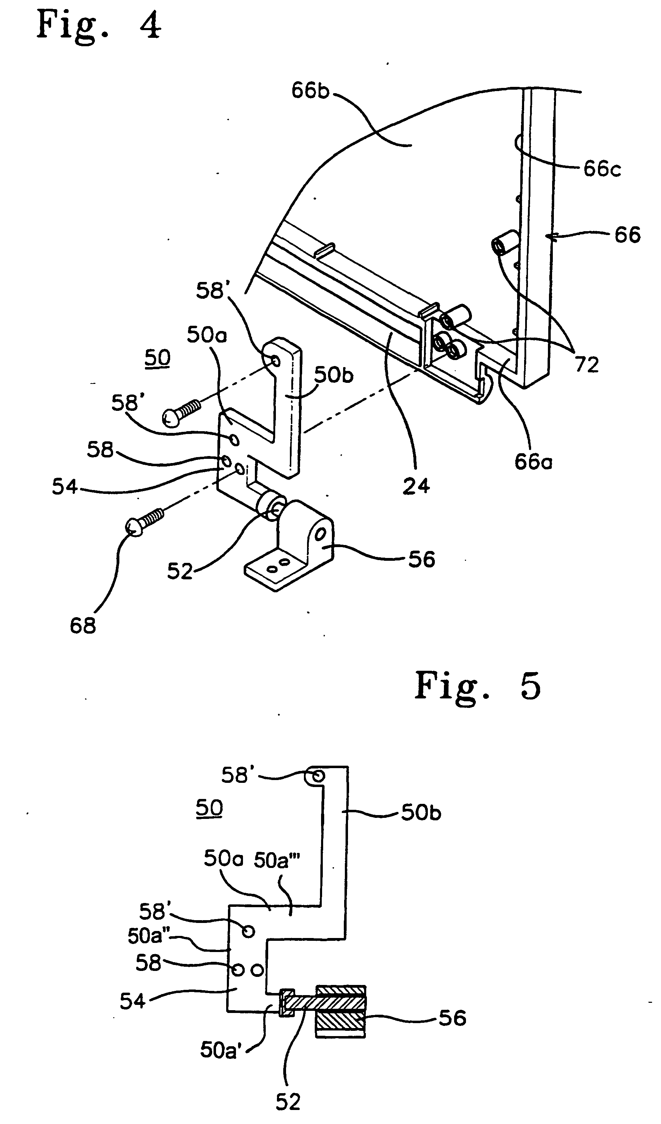

A first embodiment of the invention is described with reference to Figs. 4, 5 and 6.

As shown in Figs. 4 and 5, a pivot device 50 according to the first embodiment of the present invention comprises first and second co-operating pivot means: a pivot bearing 56 and a pivot member, coupled together. Pivot bearing 56 is intended to be firmly set in a raised or upstanding housing portion of a computer's main body 70. The pivot member consists of a mounting part 54 with a pivot shaft 52. The pivot shaft 52 is pivotally inserted into a bore in the pivot bearing 56, allowing the pivot member to rotate relative to the pivot bearing 56.

The mounting part 54 of the pivot member consists of two parts: a lower support part 50a and a side support part 50b. The lower support part 50a extends axially parallel to and radially away from the pivot shaft 52, and is attached to a lower portion 66a of a display housing 66. The side support part 50b extends radially away from pivot shaft 52. It is preferably attached to an end of the lower support part 50a remote from the pivot shaft. It is shaped to follow within the configuration of display housing 66 extending along side wall 66c. Support to the side portion of the display housing 66 is provided by the radially extending, side support part 50b of the mounting part 54.

The pivot shaft 52 may be unitarily formed with either the pivot bearing 56 or the pivot member. Alternatively, the pivot shaft may be a separate component, housed in a bore in the pivot member, and a corresponding bore in the pivot bearing.

The pivot member comprises a lower support part 50a and a side support part 50b, which may be integrally formed.

The lower support part 50a comprises a first portion 50a' extending primarily in an axial direction with respect to the pivot shaft 52, a second portion 50a'' extending primarily radially with respect to the pivot shaft 52 and a third portion 50a''' extending parallel with and radially spaced from the portion 50a'. Thus, the parts 50a', 50a'' and 50a''' are coplanar and form a rectangular "C" shape.

Side support 50b extends from an end portion of portion 50a''' distant from the portion 50a'' in a generally radial direction with respect to the pivot shaft 52 and in the same plane as the lower support part.

This arrangement allows the pivot bearing 56 to be attached inside a wall of main body 70, while upper support part 50b is mounted inside display housing 62. Typically, the walls of main housing 70 and display housing 62 are aligned.

The dimensions of the pivot member are adapted so as not to interfere with the location of display panel 64, yet to allow upper support part 50b to extend along, and in proximity with, the side wall 66c of the display housing.

The pivot shaft 52 is preferably cylindrical, as is the bore in the pivot bearing 26, suitable for being pivotally coupled together. The mounting part 54 of the pivot member is provided with a plurality of fastening holes 58, through which the pivot member is attached inside each end of the lower portion of the display housing 66, such as by using one or more screws 68.

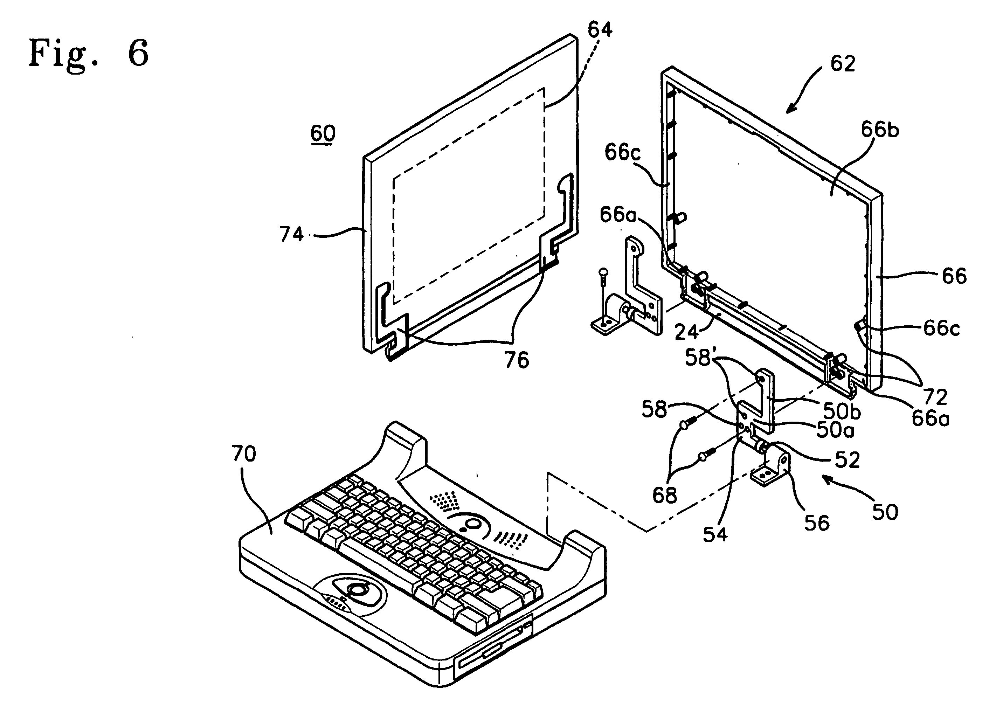

Fig. 6 is an exploded perspective view of a portable computer 60, showing the pivot device 50 of Fig. 4 provided in computer 60.

As shown in the drawing, the lower support part 50a of the pivot member is mounted within to the protrusion 24 of the display housing 66. Preferably, a plurality of screws, such as set screws 68 is used.

The lower support part 50a supports the lower portion 66a of the display housing 66. The lower support part 50a is attached to one or more boss 72, formed on the surface 66b of the display housing 66 within the lower portion, using screws 68 through screw holes 58.

The side support part 50b is attached to one or more further boss 72, formed on the surface 66b of the display housing 66 at the side portion, such as by using screws 68 through screw holes 58'.

The pivot shaft 52 is pivotally inserted into the bore of the pivot bearing 56, itself to be firmly set into each of raised or upstanding housing portions of the computer's main body 70.

In the mounting part 54 of the pivot member, the lower support part 50a is wider than the side support part 50b. The two support parts 50a and 50b respectively have fastening holes 58, 58' at positions corresponding to the bosses 72, for attaching the mounting part to the bosses 72 of the display body 66 using screws 68.

In the pivot device 50 of the first embodiment of the present invention, the lower and side support parts 50a and 50b of the pivot member's mounting part 54 firmly support the lower and side portions of the display housing 66. The weight of display panel 18 is thus more effectively distributed away from the axis of rotation of the pivot shaft 52. Similarly, torque and other forces applied during opening and closing of the computer are more effectively distributed away from the axis of rotation of the pivot shaft 52.

As shown in Fig. 6, a front panel 74 of the display body 62 has a recess 76 on its interior surface at each position corresponding to a mounting part 54 of a pivot member. The recesses 76 are shaped like mounting parts 54, so as to receive the lower and side support parts 50a and 50b. The recesses 76 have a depth corresponding to the thickness of the mounting parts 54. The display body 62 is not thickened nor enlarged due to the presence of the mounting parts 54.

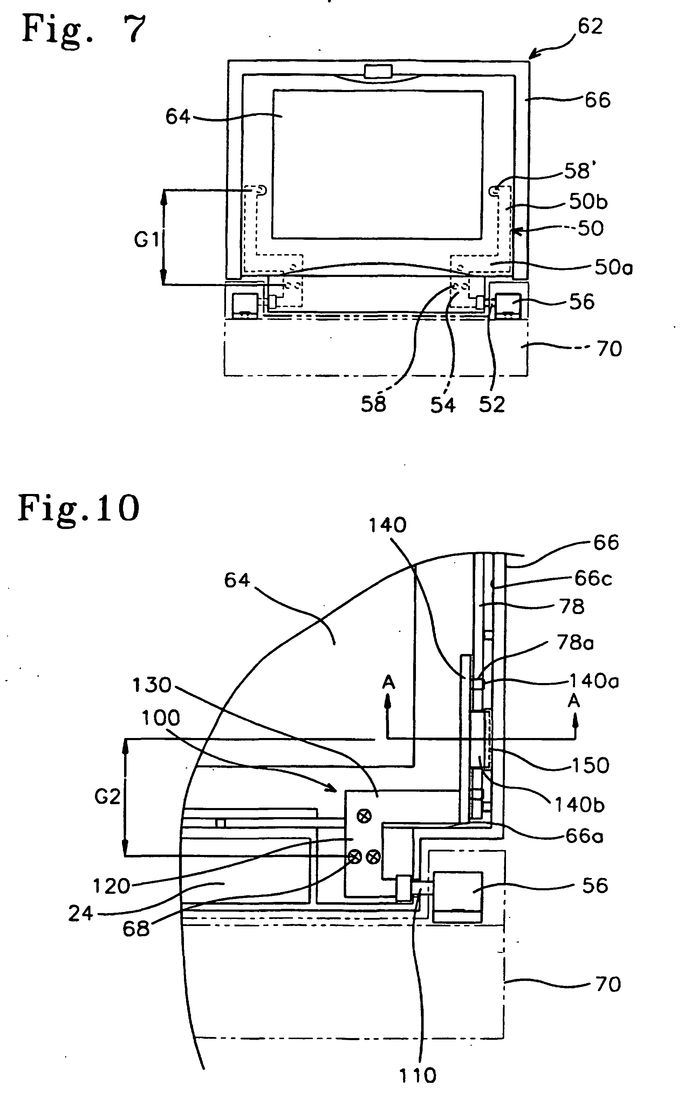

Fig. 7 is a front elevation view of a portable computer according to an aspect of the present invention. The pivot device 50 of Fig. 6 is shown in place. Reference numeral 64 indicates a display panel.

As shown in the drawing, the computer's display body 62 is hinged to the rear edge of the computer's main body 70 by pivot devices 50. The pivot members are mounted inside each end of the display housing 66 using a plurality of screws. The pivot shafts 52 are pivotally inserted into a bore of each pivot bearing 56, which is firmly set in each of the raised or upstanding housing portions of the main body 70.

Lower and side support parts 50a and 50b of the pivot member's mounting part 54 are firmly attached to the lower and side portions of the display housing 66, such as by using a plurality of screws.

In this first embodiment of the invention, the distance "G1" between supporting points of the pivot member 50 nearest to, and remotest from, the axis of rotation of the pivot shaft 52 is significantly greater than the equivalent distance ("g") of the prior art pivot device 30 of Fig. 3.

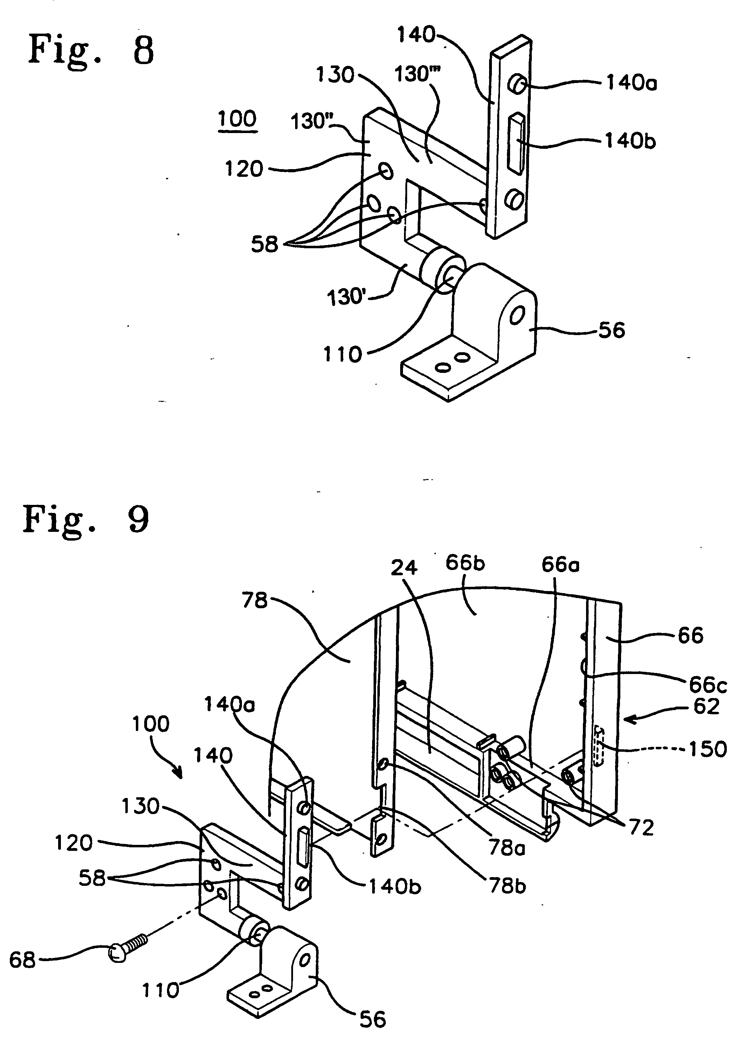

Fig. 8 is a perspective view of a pivot device 100 for portable computers according to a second embodiment of the present invention.

In this figure, the elements corresponding with those in the first embodiment of Figs. 4 to 7 are denoted by corresponding reference numerals.

As shown in Fig. 8, a pivot device 100 according to the second embodiment comprises first and second co-operating pivot means: a pivot bearing 56 and a pivot member, coupled together. The pivot bearing 56 is to be firmly set in each of raised or upstanding housing portions of the computer's main body 70. The pivot member consists of a mounting part 120 and a pivot shaft 110. The pivot shaft 110 is pivotally inserted into a bore of the pivot bearing 56. Both pivot shaft 110 and the bore of the pivot bearing are preferably cylindrical, allowing the pivot member to rotate relative to the pivot bearing 56.

The mounting part 120 of the pivot member consists of two parts: lower support part 130 and side support part 140.

The lower support part 130 extends axially and radially from the pivot shaft 110, and supports the lower portion 66a of the display housing 66, when in place.

The side support part 140 radially extends away from the pivot shaft 110. It is shaped to follow with the configuration of the display housing 66.

The pivot shaft 110 may be unitarily formed with either the pivot bearing 56 or the pivot member. Alternatively, the pivot shaft may be a separate component, housed in a bore in the pivot member, and a corresponding bore in the pivot bearing.

The pivot member comprises a lower support part 130 and a side support part 140, which may be formed integrally.

The lower support part extends radially and axially from the pivot shaft.

The lower support part 130 comprises a first portion 130' extending primarily in an axial direction with respect to the pivot shaft 52, a second portion 130'' extending primarily radially with respect to the pivot shaft 52 and a third portion 130''' extending parallel with and radially spaced from the portion 130'. Thus, the portions 130', 130'' and 130''' are coplanar and form a rectangular "C" shape.

Side support part 140 extends from an end part of portion 130''' distant from the portion 130'', in a plane perpendicular to the plane of lower support part 130, and in a generally radial direction with respect to the pivot shaft 110.

This arrangement allows the pivot bearing 56 to be attached inside a wall of main body 70, while upper support part 140 is mounted inside display housing 62. Typically, the walls of main housing 70 and display housing 62 are aligned.

The dimensions of the pivot member are adapted so as not to interfere with the location of display panel 64, yet to allow upper support part 140 to extend along, and in proximity with, the side wall 66c of the display housing.

The pivot shaft 110 is preferably cylindrical, as is the bore in the pivot bearing 56, suitable for being pivotally coupled together. The mounting part 120 of the pivot member is provided with a plurality of fastening holes 58, through which the pivot member is attached inside each end of the lower portion of the display housing 66, such as by using one or more screws 68.

Upper support part 140 is substantially planar, located in a plane perpendicular to the plane of lower support part 130. Upper support part 140 has an inner face and an outer face. Outer support face carries protrusions 140a, 140b designed to engage other parts of display body 62.

The protrusions include at least one guide pin 140a, which can fit into corresponding pin accommodating holes 78a in the side wall of a shield plate 78 of the display body 62. The side support part 140 preferably also has at least one latching protrusion 140b on its outside wall.

The pivot bearing 56 is attached inside a wall of main body 70, while upper support part 140 is mounted inside a wall of display housing 62. Typically, the walls of main housing 70 and display housing 62 are aligned.

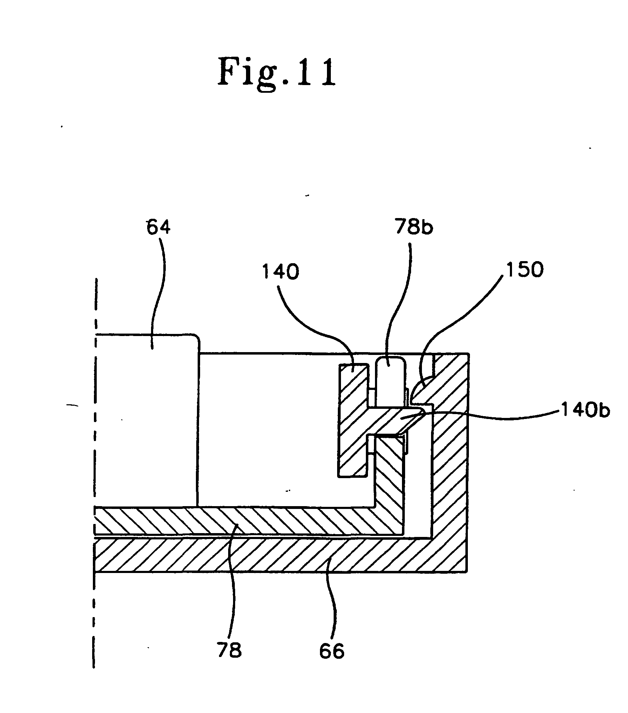

Fig. 9 is an exploded perspective view showing the pivot device of Fig. 8 in the display body 62 of a portable computer. Fig. 10 is a front view showing the pivot device 100 of Fig. 8.

As shown in the drawing, the mounting part 120 of the pivot member is mounted inside the protrusion 24 of the display housing 66 using a plurality of screws 68.

In the pivot device 100 of the second embodiment, the lower support part 130 of the mounting part 120 is attached to bosses 72, formed on the lower portion 66a of the display housing 66, such as by using screws 68 through screw holes 58. The display housing 66 is thereby supported in an axial direction, with respect to the pivot shaft. The side support part 140 is fitted to the side wall 66c of the display housing 66, thus supporting the display housing 66 in radial and rotational directions.

When the computer is assembled, the latching protrusion 140b passes through a cut-out 78b in the shield plate 78, prior to being caught by a corresponding retaining part 150 of the side wall 66c of the display housing 66. A different retaining part may be provided within the side portion of the display body 62, but a moulded protrusion on the interior surface of side wall 66c is simplest, and preferred.

The shield plate 78 of the display body 62 has at least one pin accommodating hole 78a and a cut-out 78b in its side wall. The pin accommodating hole 78a allows the guide pin 140a of the side support part 140 to pass through, while the cut-out 78b guides the latching protrusion 140b of the side support part 140. Retaining part 150 is provided at a position corresponding to the cut-out 78b. Upon assembly of the display housing 62, the retaining part 150 is brought into engagement with the latching protrusion 140b which passes through the cut-out 78b. Guide pins 140a radially support the side portion, while latching protrusion 140b provides rotational support.

Similarly to the first embodiment, the front panel of the display body 62 has a recess on its interior surface at a position corresponding to each mounting part 120 of each pivot member. The recesses have the same configuration as the mounting parts 120 consisting of the lower and side support parts 130 and 140, and have a depth corresponding to the thickness of the mounting part 120. The display body 62 is therefore not thickened despite inclusion of the mounting part 120.

Fig. 11 is a sectional view taken along the line A-A of Fig. 10, showing the interaction of the latching protrusion 140b with the retaining protrusion 150 of side wall 66c.

As shown in the drawings, the display body 62 is pivotally attached to the rear edge of the main body 70 by the pivot device of the second embodiment of the invention similarly as for the first embodiment. That is, the mounting part 120 of the pivot member is mounted inside each lower portion 66a of the display housing 66 using one or more screws 68. The pivot shaft 110 is pivotally inserted into the bore of the pivot bearing 56, which itself is to be firmly set in each of the raised or upstanding housing portions of the computer main body 70.

In summary of the second embodiment, lower support part 130 of the pivot member's mounting part 120 is firmly attached to the lower portion 66a of the display housing 66 using one or more screws 68. The latching protrusion 140b of side support part 140 of the mounting part 120 passes through a cut-out 78b in the shield plate 78 of the display body 62 prior to being caught by the retaining part 150 inside the side portion of the display housing 66. The guide pins 140a of the side support part 140 are inserted into the pin accommodating holes 78a of the shield plate 78. Therefore, the side support part 140 is brought into engagement with the side wall 66c of the display body 66, supporting the side portion of the display housing 66 in radial and rotational directions.

In the second embodiment of the invention, the distance "G2" between supporting points of the mounting part 120 nearest to, and remotest from, the axis of rotation of the pivot shaft 110 is significantly greater than the equivalent distance ("g") of the prior art pivot device 30 of Fig. 3.

In the first embodiment of the invention, the pivot device 50 effectively distributes the weight of the display body 62, containing the weighty display panel 64, over lower and side support parts 50a and 50b of each pivot member. The pivot device 50 avoids overloading the pivot shaft 52 of the pivot member by the weight of the display body 62 and avoids distortion or deformation of the display housing 66 during opening or closing actions of the display body 62, even when the display body 62 is equipped with a large-sized display panel 64.

In the second embodiment of the invention, the side support part 140 of the pivot member is firmly held in the side portion of the display housing 66 which supports the display panel 64. The pivot device 100 effectively distributes the weight of the display body 62 and avoids distortion or deformation of the display housing 66 during opening or closing actions of the display body 62 even when the display body 62 is equipped with a large-sized display panel 64.

As described above, the present invention provides a pivot device, containing a pivot member for attachment to lower and side portions of a computer's display housing through lower and side support parts. The pivot device effectively distributes the weight of the display body over lower and side support parts. This distribution effectively avoids the pivot shaft of the pivot members being overloaded by the weight of the display body even when the display body is equipped with a large-sized display panel. Distortion or deformation of the display housing during opening or closing actions of the display body is also avoided, by distribution of torque and other forces applied during opening and closing actions.

Avoidance of distortion of deformation of the display housing during opening or closing actions avoids any gap forming between the display panel and the front panel, avoids any vibrations and fatigue fracture of the pivot member, and improves the strength of the display housing.

The above examples have discussed pivot devices for attachment at one corner of main and display bodies of a computer. In practice, symmetrical pivot devices will be provided, one at each lower corner of the display body, correspondingly connected to rear corners of main body 70.

## Claims

1. A pivot device (50, 100) for a portable computer (60) comprising:
a pivot bearing (56) and a corresponding pivot member, coupled together by a pivot shaft (52, 110), for pivotally connecting a display body (62) and a main body (70) of a computer at a rear edge of the main body;
**characterised in that** the pivot member comprises:
a lower support part (50a, 120), with at least one portion extending axially with respect to the pivot shaft and away from the pivot bearing, for supporting a lower portion (66a) of the display body; and
a side support part (50b, 140), extending radially away with respect to the pivot shaft, for supporting a side portion (66c) of the display body.

2. A pivot device according to claim 1, wherein a further portion of the lower support part (50a,120) extends radially away with respect to the pivot shaft (52,110).

3. A pivot device according to claim 2 wherein the lower support part (50a,120) is a rectangular "C" shape.

4. A pivot device according to any preceding claim wherein the lower support part (50a,120) is widerthan the side support part (50b,140).

5. A pivot device according to any preceding claim wherein the lower support part (50a,120) and side support part (50b,140) are integrally formed and the side support part extends from an end of the lower support part remote from the pivot shaft.

6. A pivot device according to any preceding claim wherein the pivot bearing (56) is retained within the main body of the computer (60).

7. A pivot device according to claim 6 wherein the pivot bearing (56) is retained within an upstanding housing portion of the main body of the computer (60).

8. A pivot device according to any preceding claims wherein the lower support part (50a,120) is attachable to the lower portion of the display body (62) using at least one screw (68).

9. A pivot device according to any preceding claims wherein the side support part (50b,140) is attachable to the side portion of the display body using at least one screw (68).

10. A pivot device according to any of claims 1 to 8 wherein the side support part (140) is provided with at least one latching protrusion (140b) for engaging at least one respective retaining part (150) of the side portion of the display body (62).

11. A pivot device according to claim 10 wherein the side support part (140) is provided with at least one guide pin (140a).

12. A pivot device according to claim 11 wherein the at least one guide pin (140a) is adapted for engaging a shield plate (78).

13. A portable computer (60) comprising:
a main body (70);
a display body (62); and
at least one pivot device, as claimed in any of claims 1 to 12, for use at a junction between the main body and display body.

14. A portable computer according to claim 13 wherein the display body (62) comprises
a display housing (66) in which the pivot member is mounted; and
a front panel (74) incorporating a recess (76) on an interior surface to accommodate the pivot member.

15. A portable computer according to claim 13 or 14 wherein a pivot bearing (56) is arranged at each rear corner of the main body of the computer (60) and a corresponding pivot member is arranged at each lower corner of the display device.

## Patentansprüche

1. Schwenkvorrichtung (50,100) für einen tragbaren Computer (60) mit:
einem Schwenklager (56) und einem korrespondierenden Schwenkelement, welche über eine Schwenkachse (52,110) miteinander gekoppelt sind, um ein Anzeigengehäuse (62) und ein Hauptgehäuse (70) eines Computers an einem hinteren Rand des Hauptgehäuses schwenkbar miteinander zu verbinden;
**dadurch gekennzeichnet, daß** das Schwenkelement folgendes umfaßt:
ein unteres Tragteil (50a, 120) mit mindestens einem sich axial in bezug auf die Schwenkachse und weg von dem Schwenklager erstreckenden Abschnitt zum Tragen eines unteren Abschnitts (66a) des Anzeigegehäuses, und
ein seitliches Tragteil (50b, 140), welches sich in bezug auf die Schwenkachse radial fort erstreckt, zum Tragen eines Seitenabschnitts (66c) des Anzeigengehäuses.

2. Schwenkvorrichtung nach Anspruch 1, wobei ein weiterer Abschnitt des unteren Tragteils (50a, 120) sich in bezug auf die Schwenkachse (52,110) radial fort erstreckt.

3. Schwenkvorrichtung nach Anspruch 2, wobei das untere Tragteil (50a, 120) eine rechtwinklige "C"-Form aufweist.

4. Schwenkvorrichtung nach einem beliebigen vorangehenden Anspruch, wobei das untere Tragteil (50a, 120) breiter ist als das seitliche Tragteil (50b, 140).

5. Schwenkvorrichtung nach einem beliebigen vorangehenden Anspruch, wobei das untere Tragteil (50a, 120) und das seitliche Tragteil (50b, 140) integral geformt sind und das seitliche Tragteil sich ausgehend von einem entfernt von der Schwenkachse befindlichen Ende des unteren Tragteils erstreckt.

6. Schwenkvorrichtung nach einem beliebigen vorangehenden Anspruch, wobei das Schwenklager (56) innerhalb des Hauptgehäuses des Computers (60) aufgenommen ist.

7. Schwenkvorrichtung nach Anspruch 6, wobei das Schwenklager (56) in einem nach oben ragenden Gehäuseabschnitt des Hauptgehäuses des Computers (60) aufgenommen ist.

8. Schwenkvorrichtung nach beliebigen vorangehenden Ansprüchen, wobei das untere Tragteil (50a, 120) an dem unteren Abschnitt des Anzeigengehäuses (62) unter Verwendung mindestens einer Schraube (68) befestigbar ist.

9. Schwenkvorrichtung nach beliebigen vorangehenden Ansprüchen, wobei das seitliche Tragteil (50b, 140) an dem Seitenabschnitt des Anzeigengehäuses unter Verwendung mindestens einer Schraube (68) befestigbar ist.

10. Schwenkvorrichtung nach einem beliebigen der Ansprüche 1 bis 8, wobei das seitliche Tragteil (140) mit mindestens einem Rastvorsprung (140b) zum Eingriff in mindestens ein entsprechendes Halteteil (150) an dem Seitenabschnitt des Anzeigengehäuses (62) versehen ist.

11. Schwenkvorrichtung nach Anspruch 10, wobei das seitliche Tragteil (140) mit mindestens einem Führungsstift (140a) versehen ist.

12. Schwenkvorrichtung nach Anspruch 11, wobei der mindestens eine Führungsstift (140a) zum Eingriff in eine Abschirmplatte (78) angepaßt ist.

13. Tragbarer Computer (60) mit:
einem Hauptgehäuse (70);
einem Anzeigengehäuse (62) und
mindestens einer Schwenkvorrichtung gemäß einem beliebigen der Ansprüche 1 bis 12 zur Verwendung an einer Verbindung zwischen dem Hauptgehäuse und dem Anzeigengehäuse.

14. Tragbarer Computer nach Anspruch 13, wobei das Anzeigengehäuse (62) folgendes umfaßt:
ein Anzeigengehäuse (66), in dem das Schwenkelement montiert ist, und
eine Frontplatte (74), welche eine Ausnehmung (76) an einer inneren Oberfläche zur Aufnahme des Schwenkelementes aufweist.

15. Tragbarer Computer nach Anspruch 13 oder 14, wobei ein Schwenklager (56) an jeder hinteren Ecke des Hauptgehäuses des Computers (60) und ein entsprechendes Schwenkelement an jeder unteren Ecke des Anzeigengehäuses angeordnet ist.

## Revendications

1. Un dispositif à pivot (50, 100) pour un ordinateur portable (60) comprenant:
un palier de pivot (56) et un élément de pivot correspondant, couplés entre eux par un arbre de pivot (52, 110), pour relier de façon pivotante un corps d'affichage (62) et un corps principal (70) d'un ordinateur sur un bord arrière du corps principal;
**caractérisé en ce que** l'élément de pivot comprend :
une partie de support inférieure (50a, 120), avec au moins une portion s'étendant axialement par rapport à l'arbre de pivot et au-delà du palier de pivot, pour supporter une portion inférieure (66a) du corps d'affichage; et
une partie de support latérale (50b, 140), s'étendant radialement au-delà par rapport à l'arbre de pivot, pour supporter une portion latérale (66c) du corps d'affichage.

2. Un dispositif à pivot selon la revendication 1, dans lequel une portion supplémentaire de la partie de support inférieure (50a, 120) s'étend radialement au-delà par rapport à l'arbre de pivot (52, 110).

3. Un dispositif à pivot selon la revendication 2, dans lequel la partie de support inférieure (50a, 120) a une forme rectangulaire en "C".

4. Un dispositif à pivot selon l'une quelconque des revendications précédentes, dans lequel la partie de support inférieure (50a, 120) est plus large que la partie de support latérale (50b, 140).

5. Un dispositif à pivot selon l'une quelconque des revendications précédentes, dans lequel la partie de support inférieure (50a, 120) et la partie de support latérale (50b, 140) sont réalisées d'une seule pièce et la partie de support latérale s'étend à partir d'une extrémité de la partie de support inférieure éloignée de l'arbre de pivot.

6. Un dispositif à pivot selon l'une quelconque des revendications précédentes, dans lequel le palier de pivot (56) est maintenu à l'intérieur du corps principal de l'ordinateur (60).

7. Un dispositif à pivot selon la revendication 6, dans lequel le palier de pivot (56) est maintenu à l'intérieur d'une partie de logement en surplomb du corps principal de l'ordinateur (60).

8. Un dispositif à pivot selon l'une quelconque des revendications précédentes, dans lequel la partie de support inférieure (50a, 120) peut être reliée à la portion inférieure du corps d'affichage (62) au moyen d'au moins une vis (68).

9. Un dispositif à pivot selon l'une quelconque des revendications précédentes, dans lequel la partie de support latérale (50b, 140) peut être reliée à la portion latérale du corps d'affichage au moyen d'au moins une vis (68).

10. Un dispositif à pivot selon l'une quelconque des revendications 1 à 8, dans lequel la partie de support latérale (140) est munie d'au moins une saillie d'accrochage (140b) pour coopérer avec au moins une partie de maintien correspondante (150) de la portion latérale du corps d'affichage (62).

11. Un dispositif à pivot selon la revendication 10, dans lequel la partie de support latérale (140) est munie d'au moins un ergot de guidage (140a).

12. Un dispositif à pivot selon la revendication 11, dans lequel au moins un ergot de guidage (140a) est adapté pour coopérer avec une plaque de protection (78).

13. Un ordinateur portable (60) comprenant :
un corps principal (70);
un corps d'affichage (62); et
au moins un dispositif à pivot tel que revendiqué dans l'une quelconque des revendications 1 à 12, pour une liaison entre le corps principal et le corps d'affichage.

14. Un ordinateur portable selon la revendication 13, dans lequel le corps d'affichage (62) comprend :
un logement d'affichage (66) dans lequel est monté l'élément de pivot; et
un panneau frontal (74) comportant un renfoncement (76) sur une face interne pour loger l'élément de pivot.

15. Un ordinateur portable selon l'une des revendications 13 et 14, dans lequel est disposé un palier de pivot (56) à chaque coin arrière du corps principal de l'ordinateur (60) et est disposé un élément de pivot correspondant à chaque coin inférieur du dispositif d'affichage.
